# FASCICULE DE BREVET EUROPEEN

(11) **EP 4 153 439 B1**
(45) Date de publication et mention de la délivrance du brevet: **03.07.2024**
(21) Numéro de dépôt: 21725465.5
(22) Date de dépôt: 10.05.2021
(51) Int. Cl.: B60K 6/387, B60K 6/442, B60K 6/547, B60W 10/06, B60W 10/08, B60W 20/10, B60W 50/00, B60W 10/26, B60W 30/188, B60K 6/36, B60L 50/61, F16H 3/091, B60K 6/48

(54) **PROCÉDÉ DE COMMANDE D'UN GROUPE MOTOPROPULSEUR POUR VÉHICULE AUTOMOBILE À TRANSMISSION ÉLECTRIQUE HYBRIDE**
VERFAHREN ZUR STEUERUNG EINER ANTRIEBSSTRANGEINHEIT FÜR EIN KRAFTFAHRZEUG MIT HYBRIDEM ELEKTRISCHEN GETRIEBE
METHOD FOR CONTROLLING A POWERTRAIN UNIT FOR A MOTOR VEHICLE WITH HYBRID ELECTRICAL TRANSMISSION

(30) Priorité: 19.05.2020 FR 2005013
(43) Date de publication de la demande: 29.03.2023
(73) Titulaire: Renault s.a.s, 92100 Boulogne Billancourt (FR); NISSAN MOTOR CO., LTD., Yokohama-shi, Kanagawa 221-0023 (JP)
(72) Inventeur: MERIENNE, Ludovic, 91190 Gif-sur-Yvette (FR)
(74) Mandataire: Renault Group
(86) Numéro de dépôt international: PCT/EP2021/062260
(87) Numéro de publication internationale: WO 2021/233704

(56) Documents cités:
- WO-A1-2018/224742
- FR-A1- 2 791 195
- FR-A1- 2 921 037
- US-A1- 2002 063 001

## Description

L'invention concerne le domaine des transmissions hydrides pour véhicules automobiles. Elle concerne plus particulièrement un procédé de commande d'un groupe motopropulseur hybride de véhicule automobile comprenant un moteur à combustion interne, une machine électrique principale et une machine électrique auxiliaire liée mécaniquement au moteur à combustion interne. De tels procédés de commande sont connus de FR 2 791 195 A1, US 2002/063001 A1 et FR 2 921 037 A1.

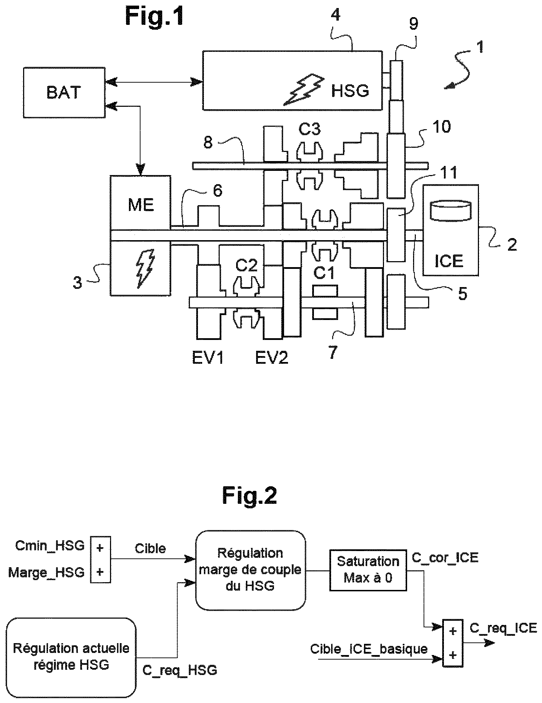

Une architecture de transmission hybride où le groupe motopropulseur comprend une machine électrique principale et une machine électrique auxiliaire, dite HSG, pour « High Voltage starter Generator », liée mécaniquement en rotation au moteur à combustion interne, est bien connue, notamment par l'exemple qu'en donne la figure 1. La présence de cette machine auxiliaire permet d'ajouter à la transmission un grand nombre de fonctionnalités, notamment en ce qui concerne la rapidité du démarrage du moteur à combustion interne.

Selon l'exemple de la figure 1, le groupe motopropulseur hybride 1 comprend un moteur à combustion interne 2 (ICE), une machine électrique principale 3 (ME) et une machine électrique auxiliaire 4 (HSG). Les deux machines électriques sont connectées électriquement à une batterie électrique de stockage du véhicule BAT. Le groupe motopropulseur 1 comprend un arbre primaire plein 5 relié au moteur 2, un arbre primaire creux 6, coaxial à l'arbre primaire plein, relié à la machine électrique principale 3, un arbre secondaire 7 et un arbre auxiliaire plein 8 relié à la machine électrique auxiliaire 4 par un pignon fixe d'entrée 9 de la machine électrique auxiliaire engrènant sur un pignon fixe de couplage auxiliaire 10 porté par l'arbre auxiliaire 8. L'arbre primaire plein 5 porte également un pignon fixe de couplage primaire 11 engrenant avec le pignon fixe de couplage auxiliaire 10 de l'arbre auxiliaire 8, assurant le passage permanent du mouvement sur l'arbre auxiliaire 8. Le moteur à combustion interne 2 lié à l'arbre primaire plein 5 est ainsi relié en permanence à la machine électrique auxiliaire 4. Autrement dit, les deux moteurs, respectivement le moteur à combustion interne 2 et la machine électrique auxiliaire 4, tournent systématiquement à des vitesses proportionnelles suivant le rapport formé par la chaîne d'engrenage 9, 10, 11.

L'engagement et le désengagement des rapports est assuré par des systèmes de couplage pilotés sans synchroniseur, à crabots ou dents plates, appelés aussi « clabots », mobiles axialement sur un arbre. Les crabots sont pilotés en direction de pignons de vitesses fixes axialement, tournant fou sur leur arbre. L'engagement des crabots mobiles sur les pignons, met en prise l'arbre et le pignon, pour transmettre le couple aux roues sur le rapport de transmission engagé.

Ici, la transmission utilise trois systèmes de couplage à crabots C1, C2, C3. C'est une boîte de vitesse de type robotisée, c'est-à-dire que son fonctionnement est celui d'une boite manuelle, mais les changements de rapport s'effectuent de façon automatisée, à l'aide d'un système d'actionnement permettant d'engager et de désengager les crabots.

La boîte de vitesses regroupe le couple du moteur 2, de la machine électrique principale 3, et de la machine électrique auxiliaire 4 sur l'arbre secondaire 7, en direction des roues du véhicule. Les changements de rapport s'effectuent sous le contrôle des trois systèmes de couplage à crabots C1, C2, C3, disposés respectivement sur l'arbre primaire plein 5, sur l'arbre secondaire 7 et sur l'arbre de renvoi 8. Le premier système de couplage, dit coupleur primaire C1, placé sur l'arbre primaire plein 5, permet d'enclencher un rapport de transmission thermique court (à gauche) correspondant au deuxième rapport de réduction de la transmission et d'enclencher un rapport de transmission thermique long (à droite) correspondant au quatrième rapport de réduction de la transmission. Le deuxième système de couplage, dit coupleur secondaire C2, placé sur l'arbre secondaire 7, permet d'engager les deux rapports de transmission électrique EV1 et EV2 de la machine électrique principale. Le troisième système de couplage, dit coupleur de transfert C3, placé sur l'arbre auxiliaire 8, permet de transférer le couple de la machine électrique auxiliaire 4 sur l'arbre secondaire 7 (à droite), ou sur l'arbre primaire creux 6 (à gauche).

Avec une telle architecture, il est possible d'engager des rapports thermiques purs dans lesquels seul le premier arbre primaire est connecté mécaniquement à l'arbre secondaire, des rapports électriques purs dans lesquels seul le second arbre primaire est connecté mécaniquement à l'arbre secondaire et des rapports hybrides dans lesquels les premiers et second arbres primaires sont tous deux connectés mécaniquement à l'arbre secondaire.

Un mode de fonctionnement particulier de cette boite de vitesse est ce qu'on appelle le mode hybride série. Dans ce mode, la machine électrique principale 3 est connectée aux roues via le rapport électrique EV1 ou EV2. Le moteur à combustion interne 2, couplé à la machine électrique auxiliaire 4, est maintenu au neutre, c'est-à-dire qu'il ne transmet pas de couple aux roues, mais tournant, ce qui offre la possibilité de faire fournir du couple au moteur à combustion interne et ainsi de recharger la batterie (ou d'alimenter directement la machine électrique principale 3), via la machine électrique auxiliaire 4 couplé au moteur à combustion interne. Ainsi, dans le mode hybride série, le moteur à combustion interne entraîne la machine électrique auxiliaire qui fonctionne alors en générateur et fournit de l'énergie électrique à la batterie et éventuellement à la machine électrique principale. La machine électrique principale fournit quant à elle la puissance mécanique aux roues. L'énergie est donc transmise en série du moteur à combustion interne, en passant par la machine électrique auxiliaire, vers la batterie ou bien vers machine électrique principale.

Dans ce mode hybride série, la machine électrique principale 3 est donc le seul moteur couplé aux roues du véhicule, via le rapport électrique EV1 ou EV2. Un des avantages de ce mode apparaît ainsi dans la possibilité d'utiliser la machine électrique principale 3 pour entraîner le véhicule, tandis que la machine électrique auxiliaire 4, entraînée par le moteur à combustion interne, fonctionne en générateur. Il est alors possible de placer la transmission sur des points de rendements intéressants pour le moteur à combustion interne, permettant de réaliser une puissance de recharge tout en régulant un régime cible compatible avec des contraintes de bruit (éviter les régimes trop élevés principalement), et de faire tourner les roues à faible vitesse, puisque c'est la machine électrique principale qui fait tourner les roues. Ce mode est donc particulièrement intéressant à basse vitesse lorsqu'aucun rapport ne permet d'engager le moteur à combustion interne (car il aurait un régime trop faible). Dans ce mode, le régime du moteur à combustion interne est choisi par la régulation, de sorte qu'on peut le faire fonctionner, même véhicule à l'arrêt, et recharger la batterie pour alimenter des consommateurs du véhicule ou bien la machine électrique principale, pour assurer le décollage du véhicule.

Le moteur à combustion interne et la machine électrique auxiliaire n'ont toutefois pas les mêmes dynamiques de réalisation de couple. Ainsi, la réponse de la machine électrique auxiliaire, qui est commandée électriquement, sera bien plus rapide que celle du moteur à combustion interne. Pour cette raison, dans ce mode, la régulation en régime de la machine électrique auxiliaire calcule le couple à appliquer à la machine électrique auxiliaire. On demande en parallèle au moteur à combustion interne de produire de la puissance. Etant donné que pour assurer l'équilibre en régime, il faut que la machine électrique auxiliaire puisse absorber toute la puissance produite par le moteur à combustion interne, on en déduit que la puissance électrique fournie au réseau HT (haute tension par opposition à la basse tension 12V du réseau de bord) du véhicule (pour fournir de l'énergie électrique à la batterie et éventuellement la machine électrique principale) sera équivalente à la puissance fournie par le moteur à combustion interne aux rendements près.

Un problème qui se pose alors est de parvenir à maîtriser avec précision la puissance fournie par le moteur à combustion interne. En effet, ce dernier est plutôt imprécis dans la réalisation du couple demandé. Il est ainsi courant d'avoir jusqu'à plusieurs dizaines de Nm d'erreur entre le couple de consigne demandé au moteur et le couple réellement réalisé. Par exemple, si le moteur surréalise le couple demandé, deux cas de figures peuvent alors se présenter. Si le bloc machine électrique auxiliaire/batterie est capacitaire pour absorber l'excédent de puissance fourni par le moteur à combustion interne, alors la régulation est conçue pour augmenter la puissance de recharge de la machine électrique auxiliaire, de façon à maintenir le régime moteur à sa valeur de consigne. L'impact est alors peu important, la puissance de recharge sera simplement plus élevée que ce que l'on souhaitait.

Par contre, si le bloc machine électrique auxiliaire/batterie n'est pas capacitaire pour absorber l'excédent de puissance fourni par le moteur à combustion interne, la régulation en régime va commander la machine électrique auxiliaire jusqu'à la limite de ses capacités. Cependant, comme le moteur à combustion interne fournit davantage de puissance, la régulation en régime partira en saturation et le régime du bloc moteur à combustion interne/machine électrique auxiliaire va augmenter, potentiellement jusqu'à atteindre le rupteur du moteur à combustion interne (régime maximum autorisé) qui fera chuter son couple, ce qui est très désagréable en termes de bruit, d'autant plus que le mode hybride série est surtout utilisé à basse vitesse, comme expliqué précédemment, et qu'aucun bruit extérieur ne viendra ainsi couvrir l'envolée de régime, si elle a lieu.

Pour pallier ce problème, une solution serait de largement surdimensionner la machine électrique auxiliaire de sorte à ce qu'elle soit toujours en mesure d'absorber l'excédent de puissance produite par le moteur à combustion interne. Cette solution n'est toutefois pas souhaitable pour des raisons de coût/encombrement. Une solution simple consiste alors à prendre une marge par rapport au potentiel du bloc machine électrique auxiliaire/batterie pour calculer la puissance demandée au moteur à combustion interne. Par exemple si le bloc machine électrique auxiliaire/batterie ne peut recharger que 20kW, alors en prenant 20% de marge, on ne demandera pas plus de 16kW de puissance au moteur à combustion interne.

Ce système de marge ne fonctionne cependant pas dans le cas où la batterie ne peut plus tolérer de puissance de recharge (puissance de recharge tolérée inférieure à 5kW par exemple). Ce cas peut se produire à froid, typiquement en dessous de -15°C, où les batteries ne supportent guère plus de quelques kW de puissance de recharge. Ce cas de figure peut également survenir après une longue période de recharge, car la batterie va moduler sa puissance de recharge. Egalement, en levé de pied et enfoncement de la pédale de freinage, la machine électrique principale va recharger la batterie, utilisant ainsi tout le potentiel de recharge de la batterie, ne laissant aucune puissance de recharge disponible à la machine électrique auxiliaire. Dans tous ces cas de figure, on observe un potentiel très faible de puissance de recharge et la marge prévue sur le potentiel devient inefficace.

En effet, même en prenant 20% de marge, sur un potentiel de puissance de recharge égal à 2kW par exemple, cela revient à demander 1600W au moteur à combustion interne. Le régime du moteur étant régulé sur une valeur cible autour de 1500 rpm, pour une puissance de 1600W, on lui demandera un couple de 10 Nm. Or, comme indiqué plus haut, le moteur peut avoir plusieurs dizaines de Nm d'erreur par rapport au couple de consigne demandé. Dans ce cas de figure, on ne peut donc pas prendre de marge suffisante, car cela reviendrait à demander un couple nul au moteur pour prévenir le cas où il surréalise le couple demandé de 10Nm.

Au vu de ce qui précède, l'invention a pour but de fournir un procédé de commande d'un groupe motopropulseur hybride de véhicule automobile palliant les inconvénients précités dans les états limites du mode hybride série. Plus particulièrement, l'invention vise à permettre de compenser les erreurs de sur-réalisation de couple du moteur à combustion interne, en mode hybride série de la transmission.

A cet effet, l'invention concerne un procédé de commande d'un groupe motopropulseur pour véhicule automobile à transmission électrique hybride, comprenant un moteur à combustion interne, une machine électrique principale et une machine électrique auxiliaire liée mécaniquement en rotation au moteur à combustion interne, lesdites deux machines électriques étant connectées à une batterie électrique de stockage du véhicule, ledit procédé comprenant, dans un mode de transmission hybride série, où la machine électrique principale génère seule la puissance mécanique vers les roues du véhicule et où le moteur à combustion interne entraîne la machine électrique auxiliaire fonctionnant en générateur pour réaliser une puissance de recharge, une étape de régulation du régime moteur à une valeur de consigne, où ledit moteur est commandé en couple sur la base d'une consigne de couple à appliquer à ladite machine électrique auxiliaire, ledit procédé étant caractérisé en ce qu'il comprend une étape de détection d'une situation de saturation de la commande en couple de ladite machine électrique auxiliaire et, en cas de saturation, une étape de correction du couple demandé au moteur à combustion interne, de sorte que le régime moteur revienne à sa valeur de consigne.

Avantageusement, l'étape de correction du couple demandé au moteur à combustion interne est effectuée en fonction d'une régulation de la marge de couple restant entre la consigne de couple de ladite machine électrique auxiliaire et un potentiel maximal de couple réalisable par la machine électrique auxiliaire, par rapport à une valeur minimale donnée de marge de couple à conserver, ladite régulation permettant de garantir ladite valeur minimale de marge de couple pour ladite machine électrique auxiliaire de façon à assurer la stabilité du régime.

Avantageusement, partant de la valeur minimale de marge de couple, la régulation calcule une valeur de correction de couple du moteur à combustion interne liée à la saturation de la machine électrique auxiliaire, destinée à corriger une cible de couple demandée au moteur à combustion interne.

Avantageusement, le potentiel maximal de couple réalisable par la machine électrique auxiliaire correspond au potentiel de puissance de recharge maximal réalisable par le bloc machine électrique auxiliaire/batterie.

Avantageusement, l'étape de correction du couple demandé au moteur à combustion interne est déclenchée lorsque le couple de la machine électrique auxiliaire s'approche d'une valeur de saturation.

Avantageusement, ladite valeur de saturation correspond à une valeur de couple maximale réalisable par ladite machine électrique auxiliaire.

Avantageusement, l'étape de correction du couple demandé au moteur à combustion interne est déclenchée lorsque le moteur à combustion interne sur-réalise le couple demandé.

D'autres caractéristiques et avantages de l'invention ressortiront clairement de la description qui en est faite ci-après, à titre indicatif et nullement limitatif, en référence aux dessins annexés sur lesquels :
[Fig. 1] est un exemple d'architecture de groupe motopropulseur pour un véhicule à transmission hybride, sur laquelle le procédé de commande de l'invention peut être mis en oeuvre ;
[Fig. 2] est un schéma bloc de la deuxième régulation mise en oeuvre dans le procédé de l'invention ;
[Fig. 3A-3E] sont des graphes illustrant l'évolution des couples du moteur à combustion interne et de la machine électrique auxiliaire, ainsi que du régime moteur, au cours du procédé de l'invention.

Comme on l'a vu en référence à la figure 1, en mode hybride série de la transmission, la régulation en régime autour d'une valeur de consigne, qui soit compatible notamment avec des contraintes de bruit (typiquement une valeur de consigne permettant d'éviter les régimes trop élevés), est réalisée par la machine électrique auxiliaire 4 et ce, en raison des dynamiques différentes de réalisation du couple entre la machine électrique auxiliaire 4 et le moteur à combustion interne 2. Pour ce faire, comme illustré à la figure 2, la régulation en régime du mode hybride série est conçue pour calculer une consigne de couple C_req_HSG à appliquer à la machine électrique auxiliaire fonctionnant en mode générateur pour réaliser une puissance de recharge donnée, tout en régulant le régime sur une valeur de consigne, tandis qu'on demande en parallèle au moteur à combustion interne 2 de produire de la puissance suivant une cible de couple Cible_ICE_basique, représentant la cible de recharge.

Lorsqu'on passe en transmission hybride série, la régulation de régime du bloc moteur à combustion interne/machine électrique auxiliaire consiste donc à déterminer une consigne de couple à appliquer à la machine électrique auxiliaire, et à piloter en parallèle le moteur à combustion interne pour produire la puissance correspondante sur la base de cette consigne de couple.

L'invention vise à permettre de gérer au mieux les cas de saturation de la machine électrique auxiliaire en mode hybride série.

Ces cas de saturation de la machine électrique auxiliaire risquent de se produire lorsque le couple de la machine électrique auxiliaire s'approche trop près d'une valeur de saturation, qui correspond à la valeur de couple maximal réalisable par la machine électrique auxiliaire. Cette saturation en couple maximal de la machine électrique auxiliaire survient lorsque le moteur à combustion interne sur-réalise le couple qui lui est demandé et que le bloc machine électrique auxiliaire/batterie n'est pas en capacité d'absorber l'excédent de puissance fourni par le moteur à combustion interne. Dans ce cas, la régulation en régime commande la machine électrique auxiliaire d'aller à la limite de ses capacités. La saturation de la machine électrique auxiliaire ne permet pas de suivre la trajectoire de couple du moteur qui fournit davantage de puissance, ce qui fait qu'on risque un dépassement du régime.

Pour contourner ce problème et afin de gérer au mieux les cas de saturation de la machine électrique auxiliaire en mode hybride série, le principe de l'invention consiste à ajouter une deuxième régulation, en plus de la régulation de régime, qui est conçue pour réguler la marge de couple Marge_HSG restant entre la consigne de couple envoyée à la machine électrique auxiliaire (calculée par la régulation de régime) et le potentiel de couple maximal réalisable par la machine électrique auxiliaire. Ce potentiel de couple maximal est obtenu à partir du potentiel de puissance de recharge maximal réalisable par le bloc machine électrique auxiliaire/batterie.

Cette deuxième régulation va donc intervenir uniquement quand il est détecté que le couple de la machine électrique auxiliaire s'approche de trop près de sa valeur limite de saturation et va permettre, dans ce cas seulement, de réduire la consigne de couple du moteur à combustion interne de sorte que le régime revienne sous contrôle, c'est-à-dire à sa valeur de consigne. Cette deuxième régulation est ainsi destinée à agir quand la première régulation, i.e. la régulation en régime faite par la machine électrique auxiliaire, sature.

Si l'on reprend l'exemple donné plus haut, dans lequel le régime du moteur est régulé sur une valeur de consigne autour de 1500 rpm et où on demande au moteur à combustion interne un couple de 10 Nm pour une puissance cible de 1600W, la commande du moteur à combustion interne en boucle ouverte est donc réalisée sur la base de la cible de couple Cible_ICE_basique, correspondant aux 10 Nm de couple demandé. Si le moteur à combustion interne ne sur-réalise pas le couple demandé, alors la machine électrique auxiliaire est bien en capacité d'absorber la puissance fournie par le moteur à combustion interne et la deuxième régulation ne va pas intervenir.

En revanche, dans le cas où le moteur à combustion interne sur-réalise la cible de couple Cible_ICE_basique, alors la machine électrique auxiliaire va arriver en saturation pour absorber la puissance supplémentaire non demandée fournie par le moteur à combustion interne et la deuxième régulation va alors intervenir. Cette deuxième régulation prend comme entrée la marge de couple Marge_HSG restant de la machine électrique auxiliaire compte tenu de la consigne de couple calculée par la régulation de régime C_req_HSG, et va réguler la marge de couple restant de façon à garantir qu'il reste toujours une valeur minimale prédéterminée de marge de couple Cmin_HSG pour la machine électrique auxiliaire permettant d'assurer la stabilité du régime. Autrement dit, la valeur minimale de marge de couple Cmin_HSG permet de définir une cible pour la régulation de la marge de couple de la machine électrique auxiliaire, liée à la saturation de la machine électrique auxiliaire. La régulation de marge de couple de la machine électrique auxiliaire est alors conçue pour calculer une valeur de correction de couple C_cor_ICE du moteur à combustion interne liée à la saturation de la machine électrique auxiliaire, destinée à corriger la cible de couple Cible_ICE_basique demandée au moteur à combustion interne. L'application de la valeur de correction C_cor_ICE à la cible de couple Cible_ICE_basique fournit la consigne de couple finale C_req_ICE du moteur à combustion interne, permettant de gérer la saturation de la machine électrique auxiliaire. Cette deuxième régulation utilise par exemple un régulateur intégral qui va prendre en entrée la différence entre le couple non saturé issu de la régulation en régime et le couple de recharge maximal autorisé auquel on soustrait la marge cible pour la régulation. On peut également ajouter une composante proportionnelle si le besoin en dynamique est plus important.

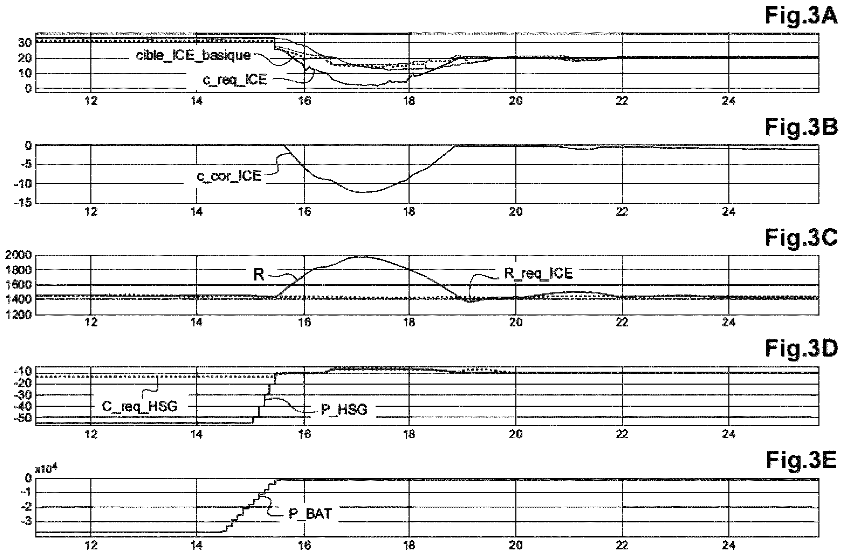

Les figures 3A à 3E sont des graphes illustrant l'évolution des couples du moteur à combustion interne et de la machine électrique auxiliaire au cours du procédé de l'invention, ainsi que du régime moteur, dans des conditions de test simulant une perte brutale de potentiel de recharge côté batterie pour la machine électrique auxiliaire, c'est-à-dire que la batterie ne laisse, dans ces conditions, aucune puissance de recharge disponible à la machine électrique auxiliaire. Il s'agit typiquement d'un cas de levée de pied, où la puissance de recharge est alors fournie par la machine électrique principale pour réaliser la volonté conducteur par exemple. Ce phénomène est illustré sur la figure 3E, qui montre la courbe du potentiel de recharge côté batterie P_BAT, qui remonte rapidement de sensiblement 35 kW de potentiel de recharge possible jusqu'à 0 kW. Cette perte brutale de potentiel de recharge côté batterie se traduit, comme illustré par la figure 3D, par le fait que le potentiel de couple disponible P_HSG de la machine électrique auxiliaire (négatif, car en mode de recharge) remonte jusqu'au couple C_req_HSG effectivement demandé par la régulation de régime à la machine électrique auxiliaire, ce qui entraîne la machine électrique auxiliaire en saturation. Comme illustré à la figure 3C, le régime moteur R augmente alors transitoirement par rapport à la valeur de consigne de régime R_req_ICE, du fait de la lenteur de la réponse du moteur à combustion interne, dont le couple ne peut pas diminuer avec la même dynamique que la machine électrique auxiliaire. Dans cette situation de saturation de la machine électrique auxiliaire, la deuxième régulation mise en oeuvre par le procédé de l'invention va permettre, comme expliqué précédemment, de faire baisser le couple demandé au moteur à combustion interne jusqu'à ce que le régime revienne à sa valeur de consigne R_req_ICE. Ainsi, selon l'exemple, on peut voir sur la figure 3C que le régime R augmente de 500rpm, puis revient progressivement à sa valeur de consigne R_req_ICE. Sans la mise en oeuvre de la deuxième régulation, le régime aurait atteint le rupteur à plus de 6000 rpm.

## Revendications

1. Procédé de commande d'un groupe motopropulseur pour véhicule automobile à transmission électrique hybride, comprenant un moteur à combustion interne (2), une machine électrique principale (3) et une machine électrique auxiliaire (4) liée mécaniquement en rotation au moteur à combustion interne, lesdites deux machines électriques étant connectées à une batterie électrique de stockage (BAT) du véhicule, ledit procédé comprenant, dans un mode de transmission hybride série, où la machine électrique principale (3) génère seule la puissance mécanique vers les roues du véhicule et où le moteur à combustion interne (2) entraîne la machine électrique auxiliaire (4) fonctionnant en générateur pour réaliser une puissance de recharge, une étape de régulation du régime moteur à une valeur de consigne (R_req_ICE), où ledit moteur est commandé en couple sur la base d'une consigne de couple (C_req_HSG) à appliquer à ladite machine électrique auxiliaire, ledit procédé étant **caractérisé en ce qu'**il comprend une étape de détection d'une situation de saturation de la commande en couple de ladite machine électrique auxiliaire et, en cas de saturation, une étape de correction du couple demandé au moteur à combustion interne, de sorte que le régime moteur revienne à sa valeur de consigne.

2. Procédé selon la revendication 1, **caractérisé en ce que** l'étape de correction du couple demandé au moteur à combustion interne est effectuée en fonction d'une régulation de la marge de couple restant entre la consigne de couple de ladite machine électrique auxiliaire et un potentiel maximal de couple réalisable par la machine électrique auxiliaire, par rapport à une valeur minimale donnée de marge de couple à conserver, ladite régulation permettant de garantir ladite valeur minimale de marge de couple pour ladite machine électrique auxiliaire de façon à assurer la stabilité du régime.

3. Procédé selon la revendication 2, **caractérisé en ce que**, partant de la valeur minimale de marge de couple, la régulation calcule une valeur de correction de couple (C_cor_ICE) du moteur à combustion interne liée à la saturation de la machine électrique auxiliaire, destinée à corriger une cible de couple (Cible_ICE_basique) demandée au moteur à combustion interne.

4. Procédé selon la revendication 2 ou 3, **caractérisé en ce que** le potentiel maximal de couple réalisable par la machine électrique auxiliaire correspond au potentiel de puissance de recharge maximal réalisable par le bloc machine électrique auxiliaire/batterie.

5. Procédé selon l'une quelconque des revendications précédentes, **caractérisé en ce que** l'étape de correction du couple demandé au moteur à combustion interne est déclenchée lorsque le couple de la machine électrique auxiliaire s'approche d'une valeur de saturation.

6. Procédé selon la revendication 5, **caractérisé en ce que** ladite valeur de saturation correspond à une valeur de couple maximale réalisable par ladite machine électrique auxiliaire.

7. Procédé selon l'une quelconque des revendications précédentes, **caractérisé en ce que** l'étape de correction du couple demandé au moteur à combustion interne est déclenchée lorsque le moteur à combustion interne sur-réalise le couple demandé.

## Patentansprüche

1. Verfahren zum Steuern eines Antriebsstrangs für ein Kraftfahrzeug mit Hybrid-Elektrogetriebe, umfassend einen Verbrennungsmotor (2), eine Hauptelektromaschine (3) und eine mit dem Verbrennungsmotor mechanisch drehfest verbundene Hilfselektromaschine (4), wobei die zwei elektrischen Maschinen mit einer elektrischen Speicherbatterie (BAT) des Fahrzeugs verbunden sind, wobei das Verfahren in einem seriellen Hybridübertragungsmodus, bei dem die elektrische Hauptmaschine (3) allein die mechanische Leistung für die Räder des Fahrzeugs erzeugt und bei dem der Verbrennungsmotor (2) die elektrische Hilfsmaschine (4) antreibt, die als Generator arbeitet, um Ladeleistung bereitzustellen, einen Schritt zum Regeln der Motordrehzahl auf einen Sollwert (R_req_ICE) umfasst, bei dem der Motor auf der Grundlage eines Drehmomentsollwerts (C_req_HSG) drehmomentgesteuert wird, der an die elektrische Hilfsmaschine angelegt werden soll, wobei das Verfahren **dadurch gekennzeichnet ist, dass** es einen Schritt zum Erkennen einer Sättigungssituation der Drehmomentsteuerung der elektrischen Hilfsmaschine und, im Falle einer Sättigung, einen Schritt zum Korrigieren des vom Verbrennungsmotor angeforderte Drehmoments umfasst, sodass die Motordrehzahl wieder auf ihren Sollwert zurückkehrt.

2. Verfahren nach Anspruch 1, **dadurch gekennzeichnet, dass** der Schritt zum Korrigieren des vom Verbrennungsmotor angeforderten Drehmoments in Abhängigkeit von einer Regelung des verbleibenden Drehmomentspielraums zwischen dem Drehmomentsollwert der elektrischen Hilfsmaschine und einem maximalen Drehmomentpotential, das von der elektrischen Hilfsmaschine erreichbar ist, durchgeführt wird, relativ zu einem gegebenen Mindestwert des einzuhaltenden Drehmomentspielraums, wobei die Regelung es ermöglicht, den Mindestwert des Drehmomentspielraums für die elektrische Hilfsmaschine sicherzustellen, um die Stabilität der Drehzahl zu gewährleisten.

3. Verfahren nach Anspruch 2, **dadurch gekennzeichnet, dass** die Regelung ausgehend vom Wert des minimalen Drehmomentspielraums einen Drehmomentkorrekturwert (C_cor_ICE) des Verbrennungsmotors berechnet, der mit der Sättigung der elektrischen Hilfsmaschine verknüpft ist, der dazu ausgelegt ist, ein vom Verbrennungsmotor angefordertes Drehmomentziel (Ziel_ICE_Basis) zu korrigieren.

4. Verfahren nach Anspruch 2 oder 3, **dadurch gekennzeichnet, dass** das von der elektrischen Hilfsmaschine erreichbare maximale Drehmomentpotential dem von der Einheit der elektrischen Hilfsmaschine/Batterie maximal erreichbaren Ladeleistungspotential entspricht.

5. Verfahren nach einem der vorstehenden Ansprüche,
**dadurch gekennzeichnet, dass** der Schritt zum Korrigieren des vom Verbrennungsmotor angeforderten Drehmoments dann ausgelöst wird, wenn sich das Drehmoment der elektrischen Hilfsmaschine einem Sättigungswert nähert.

6. Verfahren nach Anspruch 5, **dadurch gekennzeichnet, dass** der Sättigungswert einem von der elektrischen Hilfsmaschine maximal erreichbaren Drehmomentwert entspricht.

7. Verfahren nach einem der vorstehenden Ansprüche,
**dadurch gekennzeichnet, dass** der Schritt zum Korrigieren des vom Verbrennungsmotor angeforderten Drehmoments dann ausgelöst wird, wenn der Verbrennungsmotor das angeforderte Drehmoment übersteigt.

## Claims

1. A method for controlling a motor vehicle powertrain with hybrid electric transmission, comprising an internal combustion engine (2), a main electric machine (3) and an auxiliary electric machine (4) mechanically constrained to rotate with the internal combustion engine, said two electric machines being connected to an electric storage battery (BAT) of the vehicle, said method comprising, in a serial hybrid transmission mode, where the main electric machine (3) alone generates the mechanical power to the vehicle wheels and where the internal combustion engine (2) drives the auxiliary electric machine (4) operating as a generator to provide recharging power, a step of regulating the engine speed to a setpoint value (R_req_ICE), where said engine is torque-controlled on the basis of a torque setpoint (C_req_HSG) to be applied to said auxiliary electric machine, said method being **characterized in that** it comprises a step of detecting a situation of saturation of the torque control of said auxiliary electric machine and, in the event of saturation, a step of correcting the torque demanded from the internal combustion engine, so that the engine speed returns to its setpoint value.

2. The method according to claim 1, **characterized in that** the step of correcting the torque demanded from the internal combustion engine is carried out as a function of a regulation of the torque margin remaining between the torque setpoint of said auxiliary electric machine and a maximum torque potential achievable by the auxiliary electric machine, with respect to a given minimum torque margin value to be maintained, said regulation making it possible to guarantee said minimum torque margin value for said auxiliary electric machine so as to ensure stability of the speed.

3. The method according to claim 2, **characterized in that,** starting from the minimum torque margin value, the control calculates a torque correction value (C_cor_ICE) for the internal combustion engine related to the saturation of the auxiliary electrical machine, intended to correct a torque target (Cible_ICE_basique) demanded from the internal combustion engine.

4. The method according to claim 2 or 3, **characterized in that** the maximum torque potential achievable by the auxiliary electric machine corresponds to the maximum charging power potential achievable by the auxiliary electric machine/battery unit.

5. The method according to any one of the preceding claims,
**characterized in that** the step of correcting the torque demanded from the internal combustion engine is triggered when the torque of the auxiliary electric machine approaches a saturation value.

6. The method according to claim 5, **characterized in that** said saturation value corresponds to a maximum torque value achievable by said auxiliary electric machine.

7. The method according to any one of the preceding claims,
**characterized in that** the step of correcting the torque demanded from the internal combustion engine is triggered when the internal combustion engine over-achieves the demanded torque.
